# EUROPEAN PATENT SPECIFICATION

(11) **EP 2 938 186 B1**
(45) Date of publication and mention of the grant of the patent: **06.02.2019**
(21) Application number: 13869369.2
(22) Date of filing: 27.12.2013
(51) Int. Cl.: A01N 1/02, A61K 38/48, A61K 31/375

(54) **ORGAN AND TISSUE PRESERVATION FORMULATIONS WITH INCREASED STABILITY AND SHELF LIFE**
ORGAN- UND GEWEBEKONSERVIERUNGSFORMULIERUNGEN MIT ERHÖHTER STABILITÄT UND HALTBARKEIT
FORMULATIONS DE PRÉSERVATION D'ORGANES ET DE TISSUS À STABILITÉ ET DURÉE DE CONSERVATION AMÉLIORÉES

(30) Priority: 31.12.2012 US 201261848350 P; 31.12.2012 US 201261848349 P
(43) Date of publication of application: 04.11.2015
(73) Proprietor: Somahlution, LLC, Jupiter, FL 33458 (US)
(72) Inventor: SURYAN, Mahendra, Wellington, FL 33411 (US); MENON, Satish, Jupiter, FL 33458 (US)
(74) Representative: Schlich, George
(86) International application number: PCT/US2013/078052
(87) International publication number: WO 2014/106083

(56) References cited:
- WO-A1-92/08349
- US-A1- 2006 093 765
- US-B2- 8 211 628
- THATTE ET AL.: 'Development and Evaluation of a Novel Solution, Somah, for the Procurement and Preservation of Beating and Nonbeating Donor Hearts for Transplantation' CIRCULATION. vol. 120, 2009, pages 1704 - 1713, XP055197234

## Description

### FIELD

The present invention is directed to formulations for preserving tissue and organ function and more particularly to shelf stable formulations for preserving tissue and organ function prior to implantation.

### BACKGROUND

Tissues and organs for implantation or transplantation in a subject are stored extra-corporeally in liquid formulations that preserve the function of the tissues and organs until implantation. Tissue and organ preserving formulations are known. One formulation of interest is described in U.S. Patent No. 8,211,628.

The tissue and organ preserving formulation described in U.S. Patent No. 7,981,596 is generally referred to in the literature as the Lazarus formulation. More recently another tissue and organ preserving formulation generally referred to as Somah was described in Circulation 120: 1704-1713 (2004). The shelf lives of the Lazarus and Somah formulations are limited due to the instability of various components of the formulations. The relatively short shelf lives of the Lazarus and Somah formulations can limit their usefulness. Thus, there is a need to improve the Lazarus and Somah formulations to improve the stability of their components and thereby lengthen the shelf lives of the formulations.

International Patent Application Publication Number WO 92/08349 discloses a blood component. The blood component storage medium comprises a first solution including at last one sugar and having a pH of less than 7. A second, distinct solution, including a bicarbonate buffer is provided having a pH greater than 7. The two solutions are stored separately and are mixed together prior to use as a storage medium.

U.S. Patent Application Publication Number US 2006/0093765 discloses a multi-compartment pouch having front and rear sheets arranged in opposing face-to-face relation and each including a top edge, a bottom edge, and opposite side edges adapted to be connected to define a sealed pouch with an interior; and at least one frangible seal disposed in the interior of the pouch between said front and rear sheets and defining at least two separate compartments, said frangible seal comprising a first thermoplastic material attached to said front sheet and a second thermoplastic material attached to said rear sheet, said first and second materials arranged in opposing face-to-face relation across the interior of the pouch and attached to one another to define a frangible seal therebetween, said frangible seal having a seal strength that is less than the seal strength of the first material to the front sheet and the second material to the rear sheet.

### SUMMARY

The present invention relates to organ and tissue preservation solutions also referred to as Lazarus and Somah formulations having improved stability and increased shelf life when compared to the original formulations. Also described are methods of using the improved formulations.

According to the present invention, Lazarus and Somah formulations with extended shelf lives can be prepared by forming a first solution having a pH of 8-9 and a second solution having a pH of 6.8-6.4. The first solution includes components with improved stability when stored at a pH of 8 - 9, and the second solution includes components with improved stability when stored at a pH of 6.8 - 6.4. The first solution includes water, a balanced salt solution, a sugar such as D-glucose, mannose, and fructose, adenosine, orotic acid, malic acid, L-carnitine, and insulin at a pH of 8 - 9. The first solution may optionally include sodium dicholoroacetate. Formulations intended for use with cardioplegia may also include an additional amount of KCL in the first solution. The second solution includes water, an antioxidant such as ascorbic acid, a reducing agent such as reduced glutathione, L-citrulline, creatine, L-carnosine, and L-arginine at a pH of 6.8 to pH 6.4. At the point of use, the first and second solutions are mixed together to form a final formulation that can be used at a physiological pH of around pH 7.4 to preserve the function of the tissue or organ.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a perspective view of a multi-chamber bag in accordance with embodiments of the invention.
FIG. 2 is a perspective view of a kit having a first container and a second container in accordance with embodiments of the invention.

### DETAILED DESCRIPTION

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods and materials are described. For the purposes of the present invention, the following terms are defined below.

As used herein, "organ" includes, but is not limited to, the heart, veins, arteries, lungs, liver, pancreas, and the kidneys. Portions of organ are also contemplated.

As used herein, "sterile water" includes but is not limited to, (a) sterile water for injection, USP, (b) sterile distilled deionized water, and (c) sterile water for irrigation.

As used herein, "anitoxidant" is a substance that, when present in a mixture or structure containing an oxidizable substrate biological molecule, delays or prevents oxidation of the substrate biological molecule. For example, ascorbic acid is an antioxidant.

As used herein, "balanced salt solution" is defined as an aqueous solution that is osmotically balanced to prevent acute cell or tissue damage.

As used herein, "physiological solution" is defined as an aqueous salt solution which is compatible with normal tissue by virtue of being isotonic with normal interstitial fluid.

As used herein, "graft" is defined as tissue that is transplanted or implanted in part of the body to repair a defect.

As used herein, "cardioplegia" includes but is not limited to, paralysis of the heart.

As used herein, "cellular reducing agent" is defined as a substance that loses electrons easily thereby causing other substance to be reduced chemically.

Typically, these tissue preservation solutions referred to as Lazarus or Somah will contain water, a balanced salt solution, a sugar, adenosine, orotic acid, malic acid, L-carnitine, an antioxidant such as ascorbic acid and a cellular reducing agent such as glutathione, L-citrulline, creatine monohydrant, L-carnosine and L-arginine.

The stability of the tissue preservation formulations can be improved by separating the formulation into a first solution having a pH of 8-9 and a second solution having a pH of 6.8 - 6.4. The first and second solutions are mixed together to form a final isotonic organ and tissue preservation formulation that can be used at a physiological pH of around pH 7.4 to preserve the function of the tissue or organ.

The first solution includes components with improved stability when stored at a pH of 8 - 9. The first solution includes water, a balanced salt solution, a sugar such as D-glucose, fructose or mannose, adenosine, orotic acid, malic acid, L-carnitine and insulin. An exemplary embodiment includes 11 mmol/liter D-glucose, 2 mmol/liter adenosine, 0.5 mmol/liter orotic acid, 1 mmol/liter malic acid, 10 mmol/liter L-carnitine, 100 units/liter insulin, and 950 mL water. The first solution may optionally include 0.5 mmol/liter sodium dicholoroacetate. The balanced salt solution includes salts selected from the following: calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate and combinations thereof. The balanced salt solution is provided at a concentration that will result in an isotonic solution when the first and second solutions are mixed together. In an exemplary embodiment, the balanced salt solution 1.3 mmol/liter calcium chloride dihydrate, 7 mmol/liter potassium chloride, 0.44 mmol/liter potassium phosphate monobasic, 0.5 mmol/liter magnesium chloride hexahydrate, 0.5 mmol/liter magnesium sulfate heptahydrate, 125 mmol/liter sodium chloride, 5 mmol/liter sodium bicarbonate, and 0.19 mmol/liter sodium phosphate dibasic heptahydrate. Formulations intended for use with cardioplegia may also include an additional amount of KCL, such as 15 mmol/liter. Other salts can be used to provide the active ions as long as the final formulation formed from the mixture of the first and second solutions is isotonic.

The first solution has a pH in a range from pH 8 to pH 9.

The second solution includes components with improved stability when stored at a pH of 6.8 - 6.4. The second solution includes water, an antioxidant such as ascorbic acid, a cellular reducing agent such as reduced glutathione, L-citrulline, creatine monohydrate, L-carnosine, and L-arginine. The components of the second solution are provided in relative concentrations to result in an isotonic final formulation when the first solution is mixed with the second solution. In an exemplary embodiment, the second solution includes 50 milliliters of water and 20 mmol/liter reduced L-glutathione, 20 mmol/liter L-ascorbic acid, 20 mmol/liter L-citrulline, 40 mmol/liter creatine monohydrate, 200 mmol/liter L-carnosine, and 100 mmol/liter L-arginine. In an alternative exemplary embodiment, the second solution includes 50 milliliters of water and 1 mmol/liter reduced L-glutathione, 1 mmol/liter L-ascorbic acid, 1 mmol/liter L-citrulline, 2 mmol/liter creatine monohydrate, 10 mmol/liter L-carnosine, and 5 mmol/liter L-arginine. The pH of the second solution is pH 6.8 to pH 6.4.

In an exemplary embodiment, the volumetric ratio between the first solution and the second solution is 19:1. In a preferred embodiment, 950 ml of the first solution is mixed with 50 ml of the second solution to result in the final formulation for preserving the function of a tissue or organ.

The first or second formulations may optionally include an anticoagulant in an amount sufficient to help prevent clotting of blood within the vasculature of a tissue or organ. Exemplary anticoagulants include heparin and hirudin, but other anticoagulants may be used. An exemplary embodiment includes heparin in concentration ranges from 50 units/liter to 250 units/liter.

During use, the first and second solutions are mixed together to form a final formulation that can be used at a physiological pH in a range between pH 7.2 and pH 7.6 and preferably about pH 7.4, to preserve the function of the tissue or organ. If the mixture of the first and second solutions does not have a physiological pH in a range between pH 7.2 and pH 7.6, the pH of the mixture can be adjusted with a base or acid to the physiological pH.

Embodiments of the invention may be provided in a kit wherein the first and second solutions are provided in separate compartments or containers that can be mixed at the point of use to result in the final formulation.

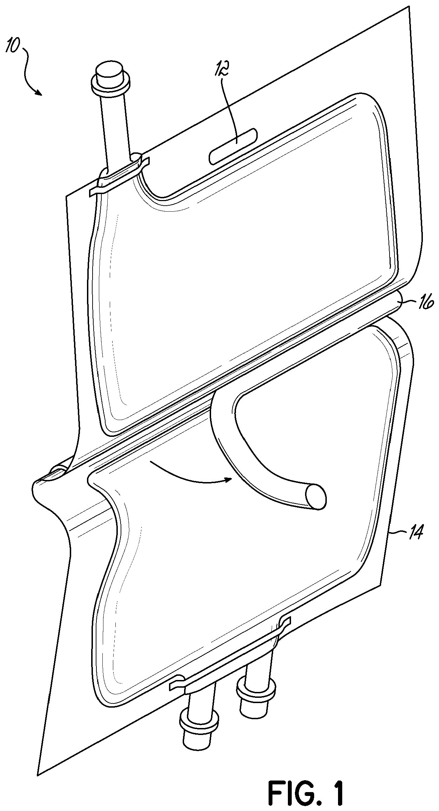

FIG. 1 illustrates a kit including an exemplary container 10 having a first compartment 12 separated from a second compartment 14 by a removable partition that includes a male member 16 and a female member 18. The first solution is maintained in one of the first 12 or second 14 compartments and the second solution is maintained in the other of the first 12 or second 14 compartments. The first and second solutions may be mixed by removing the removable partition, which results in the first and second compartments now forming a single compartment containing the final formulation for preserving tissue function. The mixture can then be used as needed.

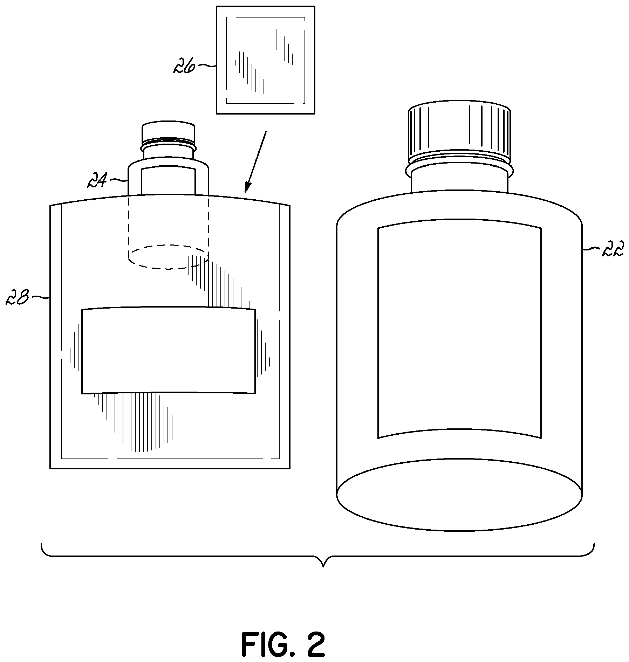

FIG. 2 illustrates an alternative kit having a first container 22 and a second container 24. The first solution is provided in the first container 22 and the second solution is provided in the second container 24. During use, the second solution is transferred from the second container 24 to the first container 22 where the first and second solutions are mixed to form the final formulation for preserving the function of a tissue or organ. The kit may optionally include a preservative, such as an oxygen absorber 26, and a pouch 28 for protecting and optionally storing one or both of the first 22 and second 24 containers. The kit may also optionally include a device, such as a syringe (not shown), for transferring the contents of one of the containers to the other container.

In the embodiment shown in Figure 2, the first solution is aseptically filled in the first container 24, such as a pre-sterilized Nalgene bottle, which is then secured with a pre-sterilized HDPE screw cap. The first container may be labeled Bottle A.

The second solution is aseptically filled into the second container 26, such as a pre-sterilized borosilicate, Type I, glass vial, which is secured with a pre-sterilized Stelmi septum, which is held in place with a tear-off seal. The tear-off seal is crimped to the bottle using a validated crimping process as the manufacturer's recommended crimp setting. The second container may be labeled Bottle B. Bottle B is de-gassed with Argon gas during the mixing and filling process to reduce the presence of oxygen. Bottle B is then placed in a pouch 28, such as a Mylar pouch filled with Argon gas and an oxygen absorber 28, to reduce oxygen exposure during its shelf life. The bottle and pouch are then labeled.

The first container 22 containing the first solution and the pouch 28 containing the second container containing the second solution are then placed in a package, such as a cardstock preprinted box. The package insert is also placed in the package and the box is sealed and labeled for distribution.

Exemplary embodiments of the kit will produce 1 liter of the final formulation and will be in 950 milliliters of the first solution and 50 milliliters of the second solution. While it is expected that the mixture of the first and second solutions provided in the kit will result in a mixture having the desired physiological pH, the kits could optionally include a device for measuring the pH of the mixture, such as litmus paper, and a set of pH adjusting agents, i.e., a base (e.g., 84% aqueous solution of NaHCO₃) and an acid (e.g., 4N HCl), for adjusting the pH of the mixture to result in a final formulation having the desired physiological pH.

Tables 1 and 2 provide specific composition for a first embodiment of the first and second solutions.

**TABLE 1: components of the first embodiment of first solution**

| COMPONENT | CONCENTRATION (mmol/L) |
|---|---|
| Calcium chloride dihydrate | 1.30 |
| Potassium chloride | 7.00 |
| Potassium phosphate, monobasic | 0.44 |
| Magnesium chloride, hexahydrate | 0.50 |
| Magnesium sulfate, heptahydrate | 0.50 |
| Sodium chloride | 125.00 |
| Sodium bicarbonate | 5.00 |
| Sodium phosphate, dibasic heptahydrate | 0.19 |
| D-Glucose | 11.00 |
| Adenosine | 2.00 |
| Orotic acid | 0.50 |
| Malic acid | 1.00 |
| L-Carnitine | 10.00 |
| Sodium dichloroacetate | 0.50 |
| Water for Injection | n/a |
| Insulin | 100 unitsl/L |
| Optional KCl (for use in cardioplegia) | 15.00 |
| pH | 8.96±0.01 |
| Color | clear |

Other salts than listed can be used or the source of the active ions provided in the above formulations.

**TABLE 2: solution B (20x)**

| COMPONENT | CONCENTRATION (mmol/L) |
|---|---|
| L-Glutathione reduced | 20.00 |
| L-Ascorbic acid | 20.00 |
| L-Citrulline | 20.00 |
| Creatine monohydrate | 40.00 |
| L-Carnosine | 200.00 |
| L-Arginine | 100.00 |
| Water for Injection | n/a |
| Sterile Argon gas | Sat* |
| pH | 6.61±0.04 |
| Color | clear |

Tables 3 and 4 provide specific composition for an alternative embodiment of the first and second solutions.

**TABLE 3: The following is an alternative embodiment of the first solution:**

| COMPONENT | CONCENTRATION (mM) |
|---|---|
| Calcium chloride dihydrate | 1.30 |
| Potassium chloride | 7.00 |
| Potassium phosphate, monobasic | 0.44 |
| Magnesium chloride, hexahydrate | 0.50 |
| Magnesium sulfate, heptahydrate | 0.50 |
| Sodium chloride | 125.00 |
| Sodium bicarbonate | 5.00 |
| Sodium phosphate, dibasic heptahydrate | 0.19 |
| D-Glucose | 11.00 |
| Adenosine | 2.00 |
| Orotic acid | 0.50 |
| Malic acid | 1.00 |
| L-Carnitine | 10.00 |
| Water for Injection | n/a |
| Insulin | 100 units/L |
| Optional KCl (for use in cardioplegia) | 15.00 |
| pH | 8.96±0.01 |
| Color | clear |

**TABLE 4: Solution B (20x)**

| COMPONENT | CONCENTRATION (mM) |
|---|---|
| L-Glutathione reduced | 1.00 |
| L-Ascorbic acid | 1.00 |
| L-Citrulline | 1.00 |
| Creatine monohydrate | 2.00 |
| L-Carnosine | 10.00 |
| L-Arginine | 5.00 |
| Water for Injection | n/a |
| Sterile Argon gas | Sat* |
| pH | 6.61±0.04 |
| Color | clear |

The formulations and methods described herein are not limited to use with a particular tissue, organ, or cell type. For example, the kit of the invention may be used with harvested saphenous veins, epigastric arteries, gastroepiploic arteries, and radial arteries used in coronary bypass grafting. The kit of the present invention may also be used to maintain organs and tissue during transplant operations. Is it contemplated that the kit of the invention may be used with organs and tissues that include, but are not limited to, heart, lung, kidney, brain, muscle, grafts, skin, intestine, bone, teeth, appendages, eyes, and portions thereof. The kit of the invention may be used as an in situ tissue or organ preservative. The kit of the invention may also be used to wash or bathe tissues and organs that have not been removed from a subject. For example, The kit of the invention may be used to maintain tissues and organs during cardioplegia. The kit of the invention may also be used in emergency procedures where a tissue or organ needs to be bathed in the formulations to preserve its function until surgery or other medical attention can be obtained. In this regard, The kit of the invention may be available to emergency medical personnel both in hospital settings and "in the field" (i.e., in ambulances or temporary emergency medical facilities).

## Claims

1. A kit for preserving the function of a tissue or organ comprising:
a first container containing a first solution, wherein the first solution is comprised of water, a balanced salt solution, a sugar, adenosine, orotic acid, malic acid, and L-carnitine and has a pH of 8 - 9;
a second container containing a second solution, wherein the second solution is comprised of water, an antioxidant, a reducing agent, L-citrulline, creatine, L-carnosine, and L-arginine and has a pH of 6.8 - 6.4

2. The kit according to claim 1 wherein the balanced salt solution includes salts selected from the group consisting of calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate and combinations thereof.

3. The kit according to claim 1 wherein the balanced salt solution includes 0.2 grams/liter calcium chloride dihydrate, 0.5 grams/liter potassium chloride, 0.06 grams/liter potassium phosphate monobasic, t 0.1 grams/liter magnesium chloride hexahydrate, 0.12 grams/liter magnesium sulfate heptahydrate, 7.3 grams/liter sodium chloride, 0.4 grams/liter sodium bicarbonate, and 0.05 grams/liter sodium phosphate dibasic heptahydrate.

4. The kit according to any previous claim wherein the second solution includes 50 milliliters of water, 0.31 grams of reduced L-glutathione, 0.18 grams of L-ascorbic acid, 0.18 grams of L-citrulline, 0.3 grams of creatine monohydrate, 2.26 grams of L-carnosine, and 0.87 grams of L-arginine.

5. The kit according to any previous claim wherein the volumetric ratio of the first solution to the second solution is 19:1.

6. The kit of claim 1 wherein the kit includes a single container comprising a first compartment and a second compartment, wherein the first compartment is the first container containing the first solution and the second compartment is the second container containing the second solution, wherein the first and second compartments are maintained as separate compartments by a partition that may be removed to allow the first and second solutions to mix to form a final formulation for preserving the function of a tissue or organ.

7. A method of preparing a formulation for preserving the function of a tissue or organ comprising:
providing a first solution wherein the first solution includes water, a balanced salt solution, a sugar, adenosine, orotic acid, malic acid, and L-carnitine and has a pH of 8 - 9;
providing a second solution, wherein the second solution includes water, an antioxidant, a reducing agent, L-citrulline, creatine, L-carnosine, and L-arginine and has a pH of 6.8 - 6.4; and
mixing the first solution with the second solution to form the complete formulation for preserving the function of a tissue or function.

8. The method of claim 7 wherein the balanced salt solution includes salts selected from the group consisting of calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate.

9. The method of claim 9 wherein wherein the balanced salt solution includes 0.2 grams/liter calcium chloride dihydrate, 0.5 grams/liter potassium chloride, 0.06 grams/liter potassium phosphate monobasic, 0.1 grams/liter magnesium chloride hexahydrate, 0.12 grams/liter magnesium sulfate heptahydrate, 7.3 grams/liter sodium chloride, 0.4 grams/liter sodium bicarbonate, and 0.05 grams/liter sodium phosphate dibasic heptahydrate.

10. The method of one of claims 7 to 9 wherein the second solution consists essentially of 50 milliliters of water, 0.31 grams of reduced L-glutathione, 0.18 grams of L-ascorbic acid, 0.18 grams of L-citrulline, 0.3 grams of creatine monohydrate, 2.26 grams of L-carnosine, and 0.87 grams of L-arginine.

11. The method of one of claims 7 to 10 wherein the volumetric ratio of the first solution to the second solution is 19:1.

12. The method of one of claims 7 to 11 further comprising:
providing a container having a first compartment and a second compartment that maintained as separate compartments by a partition, wherein the first compartment includes the first solution and the second compartment includes the second solution;
removing the partition to allow the first and second solutions to mix to form a complete formulation for preserving the function of a tissue or organ.

13. The method of one of claims 7 to 11 further comprising:
providing a first container that includes the first solution;
providing a second container that includes the second solution;
mixing the contents of the second container with the contents of the first container to form a complete formulation for preserving the function of a tissue or organ.

14. An exvivo method of preserving the function of a tissue or organ comprising:
providing a first solution wherein the first solution includes water, a balanced salt solution, a sugar, adenosine, orotic acid, malic acid, and L-carnitine and has a pH of 8 - 9;
providing a second solution, wherein the second solution includes water, a reducing agent, and an antioxidant, L-citrulline, creatine monohydrate, L-carnosine, and L-arginine and has a pH of 6.8 - 6.4;
mixing the first solution with the second solution to form the complete formulation for preserving the function of a tissue or function; and
contacting a tissue or organ with the complete formulation.

## Patentansprüche

1. Kit zur Erhaltung der Funktion eines Gewebes oder Organs, umfassend:
einen ersten Behälter, der eine erste Lösung enthält, wobei die erste Lösung Wasser, eine Balanced Salt Solution, einen Zucker, Adenosin, Orotsäure, Äpfelsäure und L-Carnitin umfasst und einen pH-Wert von 8 - 9 aufweist;
einen zweiten Behälter, der eine zweite Lösung enthält, wobei die zweite Lösung Wasser, ein Antioxidationsmittel, ein Reduktionsmittel, L-Citrullin, Creatin, L-Carnosin und L-Arginin umfasst und einen pH-Wert von 6,8 - 6,4 aufweist.

2. Kit nach Anspruch 1, wobei die Balanced Salt Solution Salze aufweist, die ausgewählt sind aus der Gruppe bestehend aus Calciumchlorid-Dihydrat, Kaliumchlorid, monobasischem Kaliumphosphat, Magnesiumchlorid-Hexahydrat, Magnesiumsulfat-Heptahydrat, Natriumchlorid, Natriumbicarbonat, Natriumphosphat zweibasischem Heptahydrat und Kombinationen davon.

3. Kit nach Anspruch 1, wobei die Balanced Salt Solution 0,2 Gramm/Liter Calciumchlorid-Dihydrat, 0,5 Gramm/Liter Kaliumchlorid, 0,06 Gramm/Liter monobasisches Kaliumphosphat, 0,1 Gramm/Liter Magnesiumchlorid-Hexahydrat, 0,12 Gramm/Liter Magnesiumsulfat-Heptahydrat, 7,3 Gramm/Liter Natriumchlorid, 0,4 Gramm/Liter Natriumbicarbonat und 0,05 Gramm/Liter Natriumphosphat zweibasisches Heptahydrat enthält.

4. Kit nach einem der vorstehenden Ansprüche, wobei die zweite Lösung 50 Milliliter Wasser, 0,31 Gramm reduziertes L-Glutathion, 0,18 Gramm L-Ascorbinsäure, 0,18 Gramm L-Citrullin, 0,3 Gramm Creatin Monohydrat, 2,26 Gramm L-Carnosin und 0,87 Gramm L-Arginin enthält.

5. Kit nach einem der vorstehenden Ansprüche, wobei das Volumenverhältnis der ersten Lösung zu der zweiten Lösung 19:1 beträgt.

6. Kit nach Anspruch 1, wobei der Kit einen einzelnen Behälter aufweist, der eine erste Kammer und eine zweite Kammer umfasst, wobei die erste Kammer der erste Behälter ist, der die erste Lösung enthält, und wobei die zweite Kammer der zweite Behälter ist, der die zweite Lösung enthält, wobei die erste und die zweite Kammer durch eine Partition als getrennte Kammern gehalten werden, wobei die Partition entfernt werden kann, um eine Vermischung der ersten und der zweiten Lösung zu ermöglichen, so dass eine finale Formulierung zur Erhaltung der Funktion eines Gewebes oder eines Organs gebildet wird.

7. Verfahren zur Zubereitung einer Formulierung zur Erhaltung der Funktion eines Gewebes oder eines Organs, umfassend:
Bereitstellen einer ersten Lösung, wobei die erste Lösung Wasser, eine Balanced Salt Solution, einen Zucker, Adenosin, Orotsäure, Äpfelsäure und L-Carnitin umfasst und einen pH-Wert von 8 - 9 aufweist;
Bereitstellen einer zweiten Lösung, wobei die zweite Lösung Wasser, ein Antioxidationsmittel, ein Reduktionsmittel, L-Citrullin, Creatin, L-Carnosin und L-Arginin enthält und einen pH-Wert von 6,8 - 6,4 aufweist; und
Mischen der ersten Lösung mit der zweiten Lösung, um die fertige Formulierung Erhaltung der Funktion eines Gewebes oder eines Organs zu bilden.

8. Verfahren nach Anspruch 7, wobei die Balanced Salt Solution Salze aufweist, die ausgewählt sind aus der Gruppe bestehend aus Calciumchlorid-Dihydrat, Kaliumchlorid, monobasischem Kaliumphosphat, Magnesiumchlorid-Hexahydrat, Magnesiumsulfat-Heptahydrat, Natriumchlorid, Natriumbicarbonat und Natriumphosphat zweibasischem Heptahydrat.

9. Verfahren nach Anspruch 9, wobei die Balanced Salt Solution 0,2 Gramm/Liter Calciumchlorid-Dihydrat, 0,5 Gramm/Liter Kaliumchlorid, 0,06 Gramm/Liter monobasisches Kaliumphosphat, 0,1 Gramm/Liter Magnesiumchlorid-Hexahydrat, 0,12 Gramm/Liter Magnesiumsulfat-Heptahydrat, 7,3 Gramm/Liter Natriumchlorid, 0,4 Gramm/Liter Natriumbicarbonat und 0,05 Gramm/Liter Natriumphosphat zweibasisches Heptahydrat enthält.

10. Verfahren nach einem der Ansprüche 7 bis 9, wobei die zweite Lösung im Wesentlichen 50 Milliliter Wasser, 0,31 Gramm reduziertes L-Glutathion, 0,18 Gramm L-Ascorbinsäure, 0,18 Gramm L-Citrullin, 0,3 Gramm Creatin Monohydrat, 2,26 Gramm L-Carnosin und 0,87 Gramm L-Arginin enthält.

11. Verfahren nach einem der Ansprüche 7 bis 10, , wobei das Volumenverhältnis der ersten Lösung zu der zweiten Lösung 19:1 beträgt.

12. Verfahren nach einem der Ansprüche 7 bis 11, ferner umfassend:
Bereitstellen eines Behälters mit einer ersten Kammer und einer zweiten Kammer, die durch eine Partition als getrennte Kammern gehalten werden, wobei die erste Kammer die erste Lösung enthält, und wobei die zweite Kammer die zweite Lösung enthält;
Entfernen der Partition, um eine Vermischung der ersten und der zweiten Lösung zu ermöglichen, so dass eine fertige Formulierung zur Erhaltung der Funktion eines Gewebes oder eines Organs gebildet wird.

13. Verfahren nach einem der Ansprüche 7 bis 11, ferner umfassend:
Bereitstellen eines ersten Behälters, der die erste Lösung enthält;
Bereitstellen eines zweiten Behälters, der die zweite Lösung enthält;
Mischen des Inhalts des zweiten Behälters mit dem Inhalt des ersten Behälters, um eine fertige Formulierung zur Erhaltung der Funktion eines Gewebes oder eines Organs zu bilden.

14. Ex vivo-Verfahren zur Erhaltung der Funktion eines Gewebes oder eines Organs, umfassend:
Bereitstellen einer ersten Lösung, wobei die erste Lösung Wasser, eine Balanced Salt Solution, einen Zucker, Adenosin, Orotsäure, Äpfelsäure und L-Carnitin umfasst und einen pH-Wert von 8 - 9 aufweist;
Bereitstellen einer zweiten Lösung, wobei die zweite Lösung Wasser, ein Reduktionsmittel und ein Antioxidationsmittel enthält, L-Citrullin, Creatin Monohydrat, L-Carnosin und L-Arginin enthält und einen pH-Wert von 6,8 - 6,4 aufweist; und
Mischen der ersten Lösung mit der zweiten Lösung, um die fertige Formulierung Erhaltung der Funktion eines Gewebes oder eines Organs zu bilden; und
Inkontaktbringen eines Gewebes oder eines Organs mit der fertigen Formulierung.

## Revendications

1. Kit pour préserver la fonction d'un tissu ou d'un organe comprenant :
un premier récipient contenant une première solution, la première solution étant constituée d'eau, d'une solution saline équilibrée, d'un sucre, d'adénosine, d'acide orotique, d'acide malique et de L-carnitine et ayant un pH de 8 à 9 ;
un second récipient contenant une seconde solution, la seconde solution étant constituée d'eau, d'un antioxydant, d'un agent réducteur, de L-citrulline, de créatine, de L-carnosine et de L-arginine et ayant un pH de 6,8 à 6,4.

2. Kit selon la revendication 1, la solution saline équilibrée comprenant des sels choisis dans le groupe constitué par le chlorure de calcium dihydraté, le chlorure de potassium, le phosphate de potassium monobasique, le chlorure de magnésium hexahydraté, le sulfate de magnésium heptahydraté, le chlorure de sodium, le bicarbonate de sodium, le phosphate de sodium dibasique héptahydraté et leurs combinaisons.

3. Kit selon la revendication 1, la solution saline équilibrée comprenant 0,2 g/litre de chlorure de calcium dihydraté, 0,5 g/litre de chlorure de potassium, 0,06 g/litre de phosphate de potassium monobasique, 0,1 gramme/litre de chlorure de magnésium hexahydraté, 0,12 gramme/litre de sulfate de magnésium heptahydraté,
7,3 grammes/litre de chlorure de sodium, 0,4 gramme/litre de bicarbonate de sodium et 0,05 gramme/litre de phosphate de sodium heptahydraté dibasique.

4. Kit selon l'une quelconque des revendications précédentes, la seconde solution comprenant 50 millilitres d'eau, 0,31 gramme de L-glutathion réduit, 0,18 gramme d'acide L-ascorbique, 0,18 gramme de L-citrulline, 0,3 gramme de monohydrate de créatine, 2,26 grammes de L-carnosine, et 0,87 gramme de L-arginine.

5. Kit selon l'une quelconque des revendications précédentes, le rapport volumétrique de la première solution sur la seconde solution étant de 19:1.

6. Kit selon la revendication 1, le kit comprenant un récipient unique comprenant un premier compartiment et un second compartiment, le premier compartiment étant le premier récipient contenant la première solution et le second compartiment étant le second récipient contenant la seconde solution, les premier et second compartiments étant maintenus comme compartiments séparés par une cloison qui peut être retirée pour permettre aux première et seconde solutions de se mélanger afin de former une formulation finale pour préserver la fonction d'un tissu ou d'un organe.

7. Procédé de préparation d'une formulation pour préserver la fonction d'un tissu ou d'un organe comprenant les étapes consistant à :
fournir une première solution, la première solution comprenant de l'eau, une solution saline équilibrée, un sucre, de l'adénosine, de l'acide orotique, de l'acide malique et de la L-carnitine et ayant un pH de 8 à 9 ;
fournir une seconde solution, la seconde solution comprenant de l'eau, un antioxydant, un agent réducteur, de la L-citruMine, de la créatine, de la L-carnosine et de la L-arginine et ayant un pH de 6,8 à 6,4 ; et
mélanger la première solution avec la seconde solution afin de former la formulation complète pour préserver la fonction d'un tissu ou d'une fonction.

8. Procédé selon la revendication 7, la solution saline équilibrée comprenant des sels choisis dans le groupe constitué par le chlorure de calcium dihydraté, le chlorure de potassium, le phosphate de potassium monobasique, le chlorure de magnésium hexahydraté, le sulfate de magnésium heptahydraté, le chlorure de sodium, le bicarbonate de sodium, le phosphate de sodium dibasique héptahydraté.

9. Procédé selon la revendication 9, la solution saline équilibrée comprenant 0,2 g/litre de chlorure de calcium dihydraté, 0,5 g/litre de chlorure de potassium, 0,06 g/litre de phosphate de potassium monobasique, 0,1 gramme/litre de chlorure de magnésium hexahydraté, 0,12 gramme/litre de sulfate de magnésium heptahydraté, 7,3 grammes/litre de chlorure de sodium, 0,4 gramme/litre de bicarbonate de sodium et 0,05 gramme/litre de phosphate de sodium dibasique heptahydraté.

10. Procédé selon l'une des revendications 7 à 9, la seconde solution comprenant essentiellement 50 millilitres d'eau, 0,31 gramme de L-glutathion réduit, 0,18 gramme d'acide L-ascorbique, 0,18 gramme de L-citrulline, 0,3 gramme de monohydrate de créatine, 2,26 grammes de L-carnosine, et 0,87 gramme de L-arginine.

11. Procédé selon l'une des revendications 7 à 10, le rapport volumétrique de la première solution sur la seconde solution étant de 19:1.

12. Procédé selon l'une quelconque des revendications 7 à 11 comprenant en outre les étapes consistant à :
fournir un récipient ayant un premier compartiment et un second compartiment qui sont maintenus comme compartiments séparés par une cloison, le premier compartiment comprenant la première solution et le second compartiment comprenant la seconde solution ;
retirer la cloison pour permettre aux première et seconde solutions de se mélanger afin de former une formulation complète pour préserver la fonction d'un tissu ou d'un organe.

13. Procédé selon l'une quelconque des revendications 7 à 11 comprenant en outre les étapes consistant à :
fournir un premier récipient qui contient la première solution ;
fournir un second récipient qui contient la seconde solution ;
mélanger le contenu du second récipient avec le contenu du premier récipient afin de former une formulation complète pour préserver la fonction d'un tissu ou d'un organe.

14. Procédé *ex vivo* de préservation de la fonction d'un tissu ou d'un organe comprenant les étapes consistant à :
fournir une première solution, la première solution comprenant de l'eau, une solution saline équilibrée, un sucre, de l'adénosine, de l'acide orotique, de l'acide malique et de la L-carnitine et ayant un pH de 8 à 9 ;
fournir une seconde solution, la seconde solution comprenant de l'eau, un agent réducteur et un antioxydant, de la L-citrulline, de la créatine monohydratée, de la L-carnosine et de la L-arginine et ayant un pH de 6,8 à 6,4 ;
mélanger la première solution avec la seconde solution afin de former la formulation complète pour préserver la fonction d'un tissu ou d'une fonction ; et
mettre en contact un tissu ou un organe avec la formulation complète.
